# EUROPEAN PATENT APPLICATION

(11) **EP 1 139 631 A1**
(43) Date of publication of application: **04.10.2001**
(21) Application number: 00302762.0
(22) Date of filing: 31.03.2000
(51) Int. Cl.: H04L 29/06

(54) **Method of initiating a data transfer from a server to a client**

(71) Applicant: BRITISH TELECOMMUNICATIONS public limited company, London EC1A 7AJ (GB)
(72) Inventor: The designation of the inventor has not yet been filed
(74) Representative: Spaargaren, Jerome

(57) **Abstract**

A method of transferring data content via a data communications network, said method comprising:
(a) transmitting an initiating request from one party to a locating server, said request containing an identifier for another party to be located;
(b) once the party to be located has been located, conducting a negotiation process between at least two parties including the located party, said negotiation process involving the transmission of data, identifying one or more parameters for defining the transfer to be performed, from at least one of the at least two parties to another of the at least two parties, until at least one of the at least two parties have indicated agreement to the parameters of the transfer to be performed;
(c) once the transfer to be performed has been agreed, conducting the data content transfer in accordance with parameters defined in step (b), said transfer occurring in one direction only between a transmitting party and a receiving party, said transmitting party only transmitting content and said receiving party only receiving content during said transfer.

## Description

### Field of the Invention

The present invention relates to methods of, computer programs for and apparatus for transferring data content via a data communications network.

### Background

Currently, the operators of servers, such as Web servers, connected to public data networks, such as the Internet, cannot initiate contact with the users of clients. This is because the client/server request-response transaction model prescribes that only clients should initiate transactions and that servers should only listen for client requests and respond to them. A conventional client browser can access content available on a Web server, but a conventional Web server cannot send content to a client browser without initial contact from the client. Similarly, conventional e-mail clients cannot communicate directly with other conventional e-mail clients because a client/server relationship exists between the e-mail clients and e-mail gateways of the network. E-mail clients need to initiate access to e-mail gateways in order to send or to receive e-mails. Once an e-mail is sent from a sender's client device to the sender-side e-mail gateway, it is generally forwarded over the network to the recipient-side e-mail gateway where it is stored until the recipient's client device accesses the recipient-side e-mail gateway. The recipient-side e-mail gateway cannot send an e-mail to an e-mail client without initial contact from the client. This situation has generally been acceptable whilst clients, both e-mail and browser, have remained intermittently connected to the Internet which has, until recently, mostly been the case. However, "always on" connection of client devices to the Internet is now a possibility and offers many advantages to users of data networks. Accordingly, the client/server model is becoming increasingly restrictive on the types of data communication possible between users of a public data network.

One approach taken in the prior art to address the constraints of the client/server model for data transfer is the so-called 'push' server model. Found in services such as Netscape's Netcaster, Microsoft's Active Channel, Castanet Marimba and PointCast, this approach is not really a push model at all since a server by definition cannot push to a client. Instead, it is an approach in which the client is arranged automatically to poll the server for new data at predefined intervals using conventional client/server interactions and pull down new data according to predetermined selection criteria. However, this approach does not address the fundamental shortcoming of the client/server architecture in that the operators of servers still cannot initiate contact with the users of clients to transfer data.

The locating of a party, to a data transfer, such a party being a user, application or content, and the negotiation of parameters relating to a data transfer, may be performed by the Session Initiation Protocol (SIP). SIP was proposed by the Internet Engineering Task Force (IETF) and is now a Internet standard published as RFC 2543. SIP is an application-layer control (signalling) protocol for creating, modifying and terminating sessions with one or more participants. These sessions include Internet multimedia conferences, Internet telephone calls and multimedia distribution.

For example, SIP allows a caller, who happens to be using an office video conferencing application on a PC, to set up a call to a callee, who happens to be lying on a beach with a mobile phone. SIP allows the call to be placed without the caller having any prior knowledge of the callee's location (i.e. at a mobile phone, on the beach) and can be used to negotiate session parameters such as the media types that can be transmitted and received between the parties. For example, the callee's mobile phone may not be able to support video transmission or reception.

Furthermore, SIP allows preferences to be accounted for during negotiation prior to establishing a call. For example, SIP provides information to the callee, such as the identity of the caller. The caller's terminal may be set to only accept personal calls during the callee's holiday on the beach. In the above, example, if the caller is the callee's boss, the mobile phone may decline to accept the call or may redirect the call to voice mail. In some respects, SIP enables functionality akin to Intelligent Network (IN) functionality to be implemented in IP networks. However, SIP would not handle terminal mobility of the mobile phone. This is completely separate and would be handled by the mobile network, such as a GSM mobile network, to which the callee subscribes.

### Summary of the Invention

Aspects of the invention are defined in the appended claims.

There now follows, by way of example only, a detailed description of preferred embodiments of the present invention in which:

### Brief Description of the Diagrams

Figure 1 shows a request-response transaction taking place between a conventional Web client and a conventional Web server according to the prior art;
Figure 2 shows an e-mail being forwarded from one conventional e-mail client to another according to the prior art;
Figure 3 shows a typical arrangement of program elements in a layered structure for use in a data processing device according to the present invention;
Figure 4 shows a first embodiment of the present invention in which a Web Browser is used to download content;
Figure 5 shows a second embodiment of the present invention in which a Web Browser is used to download content;
Figure 6 shows a third embodiment of the present invention in which a Web Provider provides content to a user;
Figure 7 shows a fourth embodiment of the present invention in which a Web Provider provides content to a user;
Figure 8 shows a fifth embodiment of the present invention in which a Web service is provided to a user;
Figure 9 shows a sixth embodiment of the present invention in which an e-mail application is used to send a direct e-mail; and
Figure 10 shows a seventh embodiment of the present invention in which an e-mail application capable of sending a direct e-mail is used to send an e-mail to the recipient-side e-mail gateway;

### Detailed Description of the Present Invention

In the various embodiments of the invention to be described below, SIP is used to locate a party to, and/or negotiate parameters for, a data transfer. SIP is an application-layer control protocol for establishing, modifying or terminating sessions between one or more parties and may be used to negotiate parameters relating to sessions prior to their establishment. SIP is not a data transfer protocol but a signalling protocol. It allows sessions to be established, modified and terminated but does not provide any data transport mechanism during the lifetime of the session. This must be provided using other protocols. A key aspect of SIP is that the concept of a party, such as a user, and the concept of the physical device used by the party are separated. In other words, SIP supports party mobility.

SIP may be implemented by transmitting Internet Protocol (IP) packets. However, SIP is independent of the packet layer and only requires an unreliable datagram service, as it provides its own reliability mechanism. While SIP is typically used over the User Datagram Protocol (UDP) or the Transmission Control Protocol (TCP), it could be used over frame relay, Asynchronous Transfer Mode (ATM), AAL5 or X.25. SIP is a text-based protocol and is based to a certain extent (in terms of syntax) on the well known Hypertext Transfer Protocol (HTTP) protocol.

In the embodiments described below, the parties to a SIP session may be users of end systems such as personal computers (PCs), personal digital assistants (PDAs) or mobile phones. However, SIP parties may also be automated applications or content whether located at an end system or at a central node of a network. A user is given an identity in SIP using an e-mail-like address of the form "user@host", where "user" is the name of the user or a telephone number and "host" is a domain name or a numerical IP address. For example, the SIP address for a user, Alan, might be "alan@bt.com". Content or applications are addressed in a similar manner. These addresses are referred to in the IETF draft as SIP Universal Resource Locators (URLs). However, it is to be understood that a SIP URL does not actually specify the location of the party, rather an identity of from which the actual location may be derived. A single SIP URL may also be used to identify a group of users, content or applications. SIP URLs may be embedded in Web pages or other hyperlinks to indicate that a particular, user, content or application is contactable via SIP. When used as a hyperlink, the SIP URL indicates use of the INVITE method described below.

In the embodiments described below, data processing devices at which SIP users, content or applications may be located generally comprise program entities in the form of SIP user agents (UAs). A SIP UA contains both a UA client and a UA server. The UA client is used to initiate a session with one or more other SIP parties and the UA server is used to respond to requests from other UA clients. SIP supports party mobility by proxying and redirecting the requests to establish sessions to the current location of the called party or parties. This is performed using a network of special SIP servers - proxy servers, redirect servers and location servers - collectively known as a SIP network. SIP proxy servers or redirect servers are able to forward or redirect requests to establish sessions by examining the information contained in the SIP message headers and possibly consulting SIP location servers which are dynamically updated with the relevant information. Both redirect and proxy servers accept registrations from SIP UAs specifying the current location of the user - i.e. the terminal at which the user is currently active. This information is stored SIP location servers accessible by the SIP proxy or redirect servers. SIP proxy or redirect servers are generally stateless - i.e. they do not maintain any record of SIP messages they transact.

To give an example of how a SIP message may be passed from one end system to another, suppose I want to make send an e-mail to "alan@bt.com", my SIP UA may first look up "bt.com" using the conventional Domain Name System (DNS) to obtain a SIP service record giving the address of an appropriate SIP proxy or redirect server, say "sip.bt.com". It then sends a SIP request to establish a data transfer session with Alan to "sip.bt.com" which consults a dedicated SIP location server and discovers that Alan is a member of the British Telecom Advanced Communications Laboratory and that the SIP server for that site is "sip.btacl.com". What happens next depends on whether "sip.bt.com" is functioning as a SIP proxy server or redirect server.

If "sip.bt.com" is functioning as a SIP proxy server, it proxies the SIP request on to "sip.btacl.com" itself. However, if "sip.bt.com" is functioning as a SIP redirect server, it responds to the SIP request received from my SIP UA by returning a message specifying the SIP address "sip.btacl.com" to which my SIP UA can then redirect its original request to set up a data transfer session. Whether or not "sip.bt.com" is a proxy or a redirect server, ultimately "sip.btacl.com" will receive a SIP request message to set up a session with Alan and will again consult a second SIP location server. It may be that the request gets proxied or redirected to a further SIP server, however, let us assume that the second SIP location server is close enough to Alan to have been dynamically updated with his actual location - i.e. a terminal at which he is currently active. As before, if "sip.btacl.com" is a SIP proxy server, it proxies the SIP request on to the SIP UA running on Alan's terminal itself. If "sip.btacl.com" is a SIP redirect server, it returns a message specifying Alan's terminal address to the previous SIP server which can then redirect the request directly or return Alan's terminal address to my SIP UA for redirection.

There is an alternative to using DNS to obtain the address of an appropriate SIP server to send the SIP request to. My SIP UA may already have the addresses of one or more SIP servers. For example, it may have recently cached the address of a suitable SIP server from a previous DNS query. In this case, it may pass the SIP request message to set up a session with Alan to one of these known SIP servers which will then proxy or redirect the message on through the SIP network as described above until the message is passed to Alan's active terminal.

SIP proxy and redirect servers are able to resolve location ambiguities in SIP URLs not only on the basis of location registration data held in SIP location servers, but also on the basis of information provided in the SIP request messages themselves or on the basis of a comparison of other data held in the SIP location server with information provided in the SIP request messages. For example, when my SIP request message for Alan reaches "sip.btacl.com", it may be that Alan is currently registered with the SIP location server as being active on both a PC and a mobile phone with e-mail capabilities. However, "sip.btacl.com" may be arranged to resolve the ambiguity of there being two terminals at which to contact Alan by selecting the most appropriate in accordance with pre-stored user preferences for Alan - Alan's mobile phone for example. SIP servers may also be able to resolve location ambiguities on the basis of external information or globally relevant data. For example, a SIP server may take into account the date or time of day when resolving a location ambiguity.

Furthermore, when my SIP request message to set up a session with Alan is finally received at Alan's terminal, it may or may not be acceptable. For example, Alan may not wish to receive an e-mail from me. This might result in the SIP UA of Alan's terminal simply passing a message back to my SIP UA declining the session. In general, Alan's terminal may be arranged to accept invitations to certain types of sessions defined by certain session parameters, but my request may not fall into that category. However, Alan's terminal may be arranged to respond to my request not by declining it but by suggesting alternative session parameters that would be acceptable to it. On receipt of these parameters, my SIP UA may then send a second request to establish a session conforming to those parameters. For example, Alan's mobile phone may not be capable of replaying a video attachment in the e-mail whereas his PC has such a capability.

SIP proxy servers are also able to fork a single request to two or more further SIP servers in parallel. This process of forking SIP request messages can be repeated at subsequent SIP proxy servers, and thus multiple versions of the same original SIP request message may be traversing the SIP network at any one time. Forking enables the location of the user to be ascertained via the SIP network more quickly than if each SIP proxy server were only able to proxy the request message to a single further SIP server.

In the embodiments described below, interactions between SIP UAs follow the client/server request-response transaction model. A first party's SIP UA client sends a request to a second party's SIP UA server. In return, the second party's SIP UA server sends a response back to the first party's SIP UA client. SIP defines six client request methods, namely INVITE, ACK, BYE, OPTIONS, CANCEL and REGISTER. Broadly, INVITE is used to invite one or more parties to a session; ACK is used to acknowledge a successful response; BYE is used to terminate a session or session request; CANCEL is used to terminate an incomplete session request; OPTIONS is used to discover the capabilities of a party; and REGISTER is used to register the current location of a party with a SIP server. A SIP request message comprises a single request line, one or more header lines and a usually a message body. The request line indicates the type of the message, the message destination and the SIP version it complies. The following is one example:
INVITE sip:alan@bt.com SIP/2.0
Header lines contain the name of the header type, followed by a semi-colon and the contents as defined for the specific header. The following are examples:
To: sip:dave@bt.com
From: sip:george@bt.com
Contact: sip:alan@bt.com
Subject: Brainstorm

The message body may be of any content, although it may have contents formatted in accordance with the Session Description Protocol (SDP). In SIP, the content type of the message body is defined using a Content-Type: header line followed by a Multipurpose Internet Mail Extension type (MIME type) such as in the following example:
Content-Type: application/sdp

The above example would specify that the message body of a SIP message was formatted in accordance with SDP. SDP is an IETF proposed standard published as RFC 2327. A session description in SDP is a textual description of the name and purpose of the session together with a description of parameters relevant to the session. SDP is purely a format for session description and it does not itself incorporate a transport mechanism. SDP was developed with a view to describing sessions for streaming real-time multimedia, for example, between parties to a tele-conference. Parameters that may be described using standard SDP include session-level parameters, such as media types and time intervals during which the session is valid, and media-level parameters which are only relevant to each specified media type, such as the transport protocol relevant to a specified media type may be selected. Currently, SDP only defines two transport protocol options - UDP, or the Real Time Protocol (RTP). However, SDP may be extended through registration of new protocols with Internet Assigned Naming Authority (IANA) or by using attributes to define new parameters as described in the IETF standard. Alternatively, parameters may be described in a new description protocol altogether and this may be referenced in the SIP Content-Type header line as described above.

Responses to SIP request messages indicate acceptance or rejection, distinguished by status codes - 1xx (100 to 199) for information about the session status, 2xx for success, 3xx for redirection to another SIP server, and higher numbers - 4xx, 5xx, and 6xx - for failure. SIP response messages are structured similarly to SIP request messages. A response message comprises a single response status code line, one or more header lines and sometimes a message body. The header lines and message body are structured as described above. The following are exemplary SIP response status code lines:
200 OK
301 Moved Permanently
606 Unacceptable

Each new SIP transaction has a unique call identifier (call ID), which identifies the session. If the session needs to be modified, the same call identifier is used in a further INVITE request in order to indicate that this is a modification of an existing session.

It is to be understood that in all of the following embodiments of the present invention, SIP INVITE request messages, SIP REGISTER request messages, SIP OPTIONS request messages, and SIP response messages may each specify a set of any relevant data transfer parameters, which may be described using a description protocol, such as SDP, or extended SDP, or a different description protocol. Whilst, some examples of such parameters have been given in the following description of the embodiments, it is to be understood that any of the parameters described below may be specified in any of the above SIP messages in any of the following embodiments.

In general, data transfer parameters, which are negotiable in the embodiments described below, may relate to any of sender or recipient terminal characteristics, data characteristics, service characteristics, user characteristics or preferences, network characteristics, data transfer modes and other parameters to be used in the session negotiated.

Sender or recipient terminal characteristics may include any characteristics regarding what a terminal can deal with - eg. terminal inputs and outputs (eg. a display type, a display resolution, a refresh rate, audio capabilities, a sound card type, a camera type and resolution, a microphone type, a mouse type, a keyboard type etc.); hardware configuration (eg. a processor type, speed, a memory capacity, network cards fitted); and software configuration (eg. a browser type and version, an e-mail application and version, an operating system type and version).

Data characteristics may include any characteristics relevant of data for transfer during the session such as a data size, data format, a database field format, a variable format, Interface Definition Language (IDL) stubs, name resolution formats, an application to be invoked for processing the data, a compression type, an encryption method, a digital signing method, and a trusted 3rd party address.

Service characteristics may include a definition of a type of service, a quality of service (eg to negotiate with the network for quality of service for a session such as peak rate, minimum rate, burst rate, jitter, maximum delay, packet loss rate, token bucket size).

User characteristics or preferences may include an actual location of the user (terminal or geographical), preference filters such as a preferred time or period for data transmission, acceptable callees etc., business transaction details.

Network characteristics may include a coding type, a bandwidth criteria, and a compression type.

Data transfer modes include any application layer data transfer protocol such as HTTP, File Transfer Protocol (FTP), Secure HTTP (HTTPS), Network News Transfer Protocol (NNTP), Simple Mail Transfer Protocol (SMTP), Telnet, Rlogin, Transaction Initiation Protocol (TIP). Lack of a transfer mode (eg. sending data over raw TCP sockets or over UPD) may also be negotiated.

In the embodiments described below, reference will be made to trigger events. It is to be understood that a trigger event means the occurrence of any event satisfying predetermined criteria which triggers an action. For example, trigger events may be the release of a new version of an application program such as Netscape Navigator, a stock price rising above or falling below predetermined values, a user action such as a fire alarm being triggered, a process event, the occurrence of a back-end event in a e-commerce transaction, or a diary event. In general, trigger events may be based on any user set criteria or service provider set criteria, and may depend on the occurrence of any local or global events. Where no reference is made to a trigger event, in the following embodiments, it is to be understood that any SIP INVITE request message may be triggered by the occurrence of a trigger event such as described above.

### Figure 1

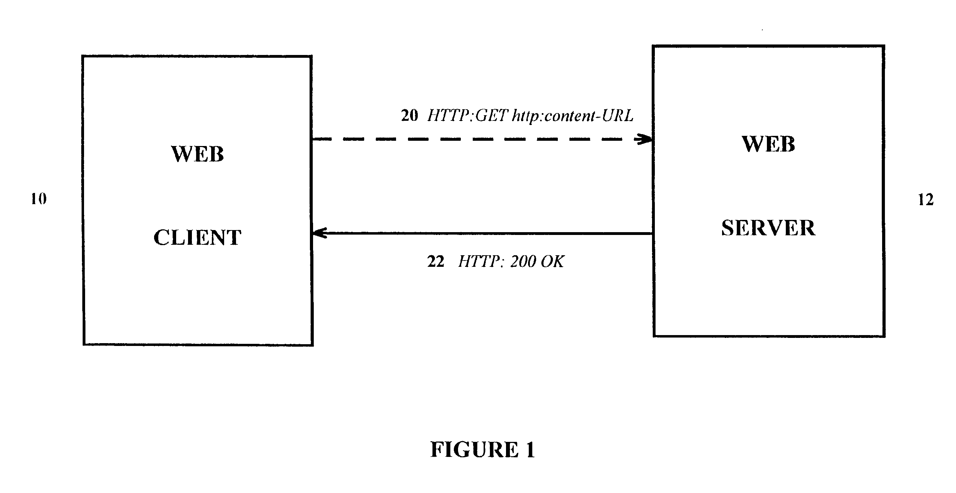

Figure 1 shows a request-response transaction taking place between a conventional Web client and a conventional Web server according to the prior art. Web client 10 interacts with Web server 12 by first issuing a HTTP GET request at step 20 specifying a particular content URL located at Web server 12. Web server 12 responds by sending an HTTP 200 OK message to Web client 10 at step 22. The required content is appended to the HTTP 200 OK message as the message body. The interaction follows the client/server embodiment in that Web client 10 must initiate the interaction and specify the content URL. Web server 12 cannot contact Web client 10 of its own initiative. In some respects, this conventional arrangement resembles a catalogue order business embodiment for items (ie. content). Clients may order specified items from the catalogue, but the order business can only respond passively. It cannot send unsolicited content to the client.

### Figure 2

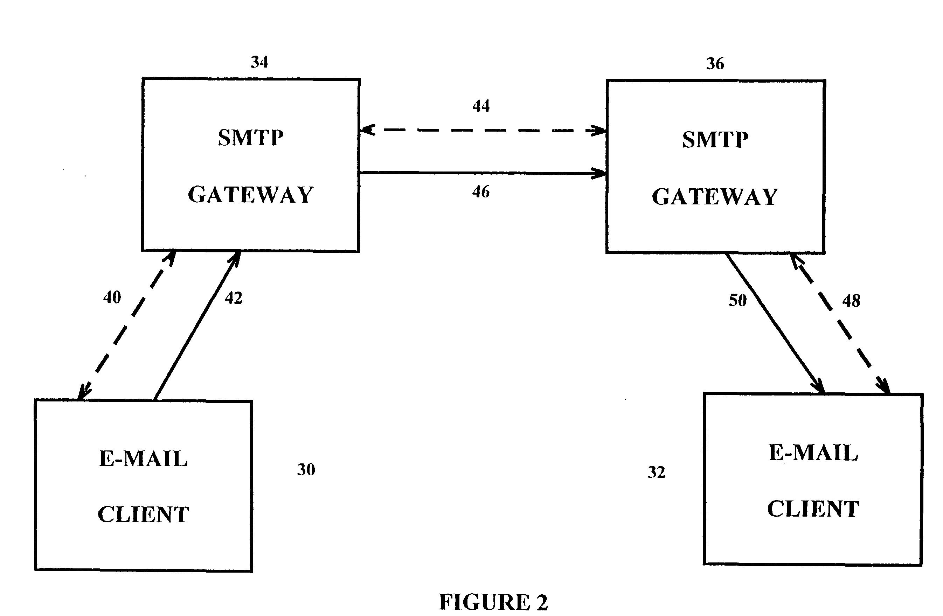

Figure 2 shows an e-mail being forwarded from one conventional e-mail client to another according to the prior art. E-mail client 30 first establishes a connection with a sender-side Simple Mail Transfer Protocol (SMTP) gateway 34. Typically, the connection will use the Post Office Protocol (POP), or the Internet Message Access Protocol (IMAP). Once the connection is established, e-mail client 30 submits a completed e-mail to SMTP gateway 34 at step 42. Gateway 34 forwards the e-mail through the SMTP network at step 46 until it reaches the recipient-side SMTP gateway 36. SMTP gateway 36 stores the e-mail until the recipient, e-mail client 32, connects to it using POP or IMAP at step 48. Then, SMTP gateway 36 sends the e-mail to its recipient at step 50. This conventional arrangement for sending and receiving e-mails resembles the postal service for physical documents in some ways. The e-mail is not sent directly between the sender and the recipient but via a third party - in this case the SMTP network. Thus, delivery is relatively slow and involves significant storage and signalling in the SMTP network. Furthermore, as e-mail client 32 may only connect to SMTP gateway 36 intermittently, the user may not be aware that mail is waiting for him/her.

The following descriptions and accompanying diagrams will be used to describe embodiments of the present invention which involve use of SIP to overcome the deficiencies of the prior art. However, for clarity and to avoid repetition, where SIP request and response messages are described, only the essential messages and only the essential elements of each message will be described. In particular, according to SIP, 200 OK responses to successful INVITE request messages should be acknowledged with an ACK message. This is standard SIP and will not be described any further below, save where relevant to the particular functioning of an embodiment of the present invention. Similarly, after a session is set up using SIP, a party should issue a BYE request to release the session. Again, this is standard SIP and will not be described any further below, save where relevant to the particular functioning of an embodiment of the present invention.

### Figure 3

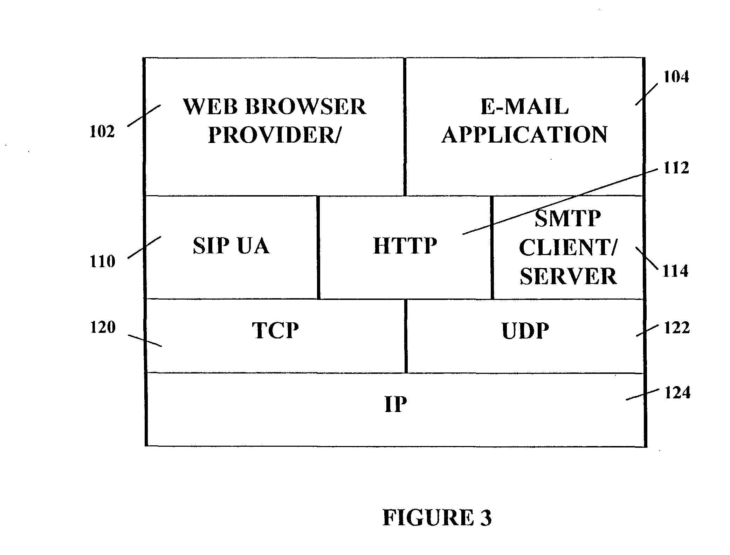

Figure 3 shows a typical arrangement of program components in a layered structure for use in a data processing device according to the present invention. A user terminal such as a PC, PDA or mobile phone will typically run a Web Browser 102 and/or an e-mail application 104 suited to its particular requirements. For example, while a PC has the storage facility and desk top real estate to provide a fully functioned Web Browser, a mobile phone will probably use a more compact Web Browser probably conforming to the Wireless Application Protocol (WAP). Web Browser 102 and e-mail application 104 may be described as being at the user application level. Under them, at the network application level, are various network application protocol elements, such as a SIP UA 110, an HTTP client 112, and preferably an HTTP server, and an SMTP client and server 114. Under them are the transport layer protocol elements, such as a TCP agent 120 and a UDP agent 122, and finally underneath them is the network layer interface namely an IP agent 124. Data for transmission over the network is generated at the user application layer and passed down through the protocol stack, via the appropriate protocol interfaces, and is ultimately sent over the physical cabling or radio interfaces of the data network. For example, a SIP message, generated by the SIP-enabled Web Browser 102 will be sent to the SIP UA 110 and then onto the TCP agent 120 or UDP agent 122 as appropriate. Data processing devices which are not on the user side, such as those which run Web Providers as described below, include similar elements to those described above, including in particular a SIP UA in their protocol stack.

In the following , various applications programs are described as being "SIP-enabled" which is intended to signify that the programs have interfaces with a SIP UA present on the same device. Where it is indicated that an application program send or receives a SIP message it is to be appreciated that the messages are sent and received by the SIP UA.

### Figure 4

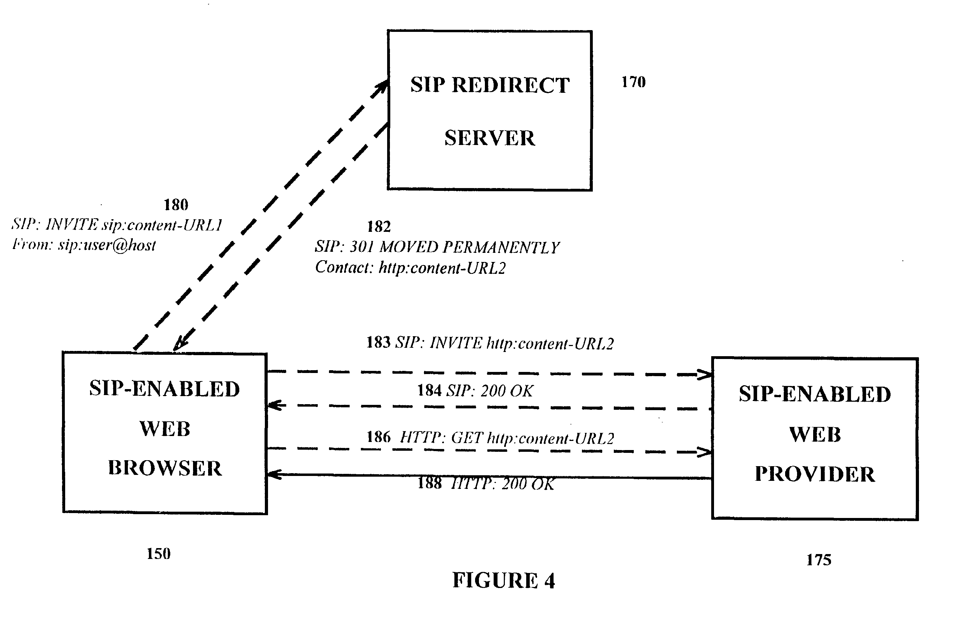

Figure 4 shows a first embodiment of the present invention in which a Web Browser is used to download content. Web Browser 150 is a SIP-enabled Web Browser running on a user terminal such as a PC. Web Browser 150 is similar to conventional Web browser but comprises a SIP UA arranged in the protocol stack as described with reference to Figure 3. The user of Web Browser 150 wishes to access Web content but does not know the most appropriate location of the content for his purposes, or perhaps does not know any location of the content. However, the user does know a SIP URL which identifies the content. Accordingly, the user enters the SIP URL into Web Browser 150. Treated as a hypertext link, this causes Web Browser 150 to use the INVITE method and send, at step 180, a SIP request message "INVITE sip:content-URL1" to an appropriate SIP server 170 together with relevant further header lines, including a "From:" line indicating the current user's location - i.e. at a particular PC - and a possibly message body describing a set of relevant session parameters in SDP or another description protocol.

In this embodiment, SIP server 170 is a SIP redirect server. To resolve the content location ambiguity of the received SIP INVITE message, SIP server 170 may contact one or more further SIP servers (not shown) such as SIP proxy redirect or location servers. Alternatively, SIP server 170 may be able to resolve the SIP INVITE message appropriately itself. At step 182 SIP server 170 returns a response message of the form "SIP: 301 PERMANENTLY MOVED ... Contact: http:content-URL2" to Web Browser 150. This content-URL provides an actual location of the content at SIP-enabled Web Provider 175. Since SIP content URLs are treated in the same way as SIP user URLs, the SIP network knows the location of all content registered by SIP-enabled Web Providers using the REGISTER request message. Web Provider 175 is selected by the SIP network on the basis of information relevant to the user, such as the location of the user and session parameters specified in Web Browser 150's SIP request message, and the location of the content and other parameters known about Web Provider 175. For example, the capabilities and geographical locations of Web Browser 150 and Web Provider 175 may be taken into account in selecting content at Web Provider 175 over other Web Providers.

On receiving the SIP: 301 PERMANENTLY MOVED message, Web Browser 150 is then able to redirect its SIP INVITE request message to Web Provider 175, at step 183. At step 184, Web Provider 175 responds with a SIP 200 OK message, and the session is established a SIP between them. Then, an HTTP: GET request message is passed from Web Browser 150 to Web Provider 175, at step 186, and the HTTP: 200 OK response with the required content is passed at step 188.

However, Web provider 175 may not be able to provide the content for some reason, or may wish to negotiate alternative session parameters with Web Browser 150 in which case a different message may be sent at step 184 and to Web Browser 150. The request-response process described with reference to steps 183 and 184 may then be repeated until Web Browser 150 and Web provider 175 have negotiated appropriate session parameters for provision of the required content. The session parameters may include any of the parameters listed above. For example, Web provider 175 may be overloaded and may wish to negotiate with Web Browser 150 a time period in which the content should be requested and provided. If the user of Web Browser 150 accepts this (he/she may have preset acceptable negotiated parameters or may be queried directly in real time) then the Web Provider could provide the content automatically at the negotiated time, for example.

Thus, by using SIP, the user of Web Browser 150 is able to find the most appropriate source of required content without any manual steps. Also, network loading may be reduced by resolving the most appropriate location of their desired content in the SIP signalling network.

### Figure 5

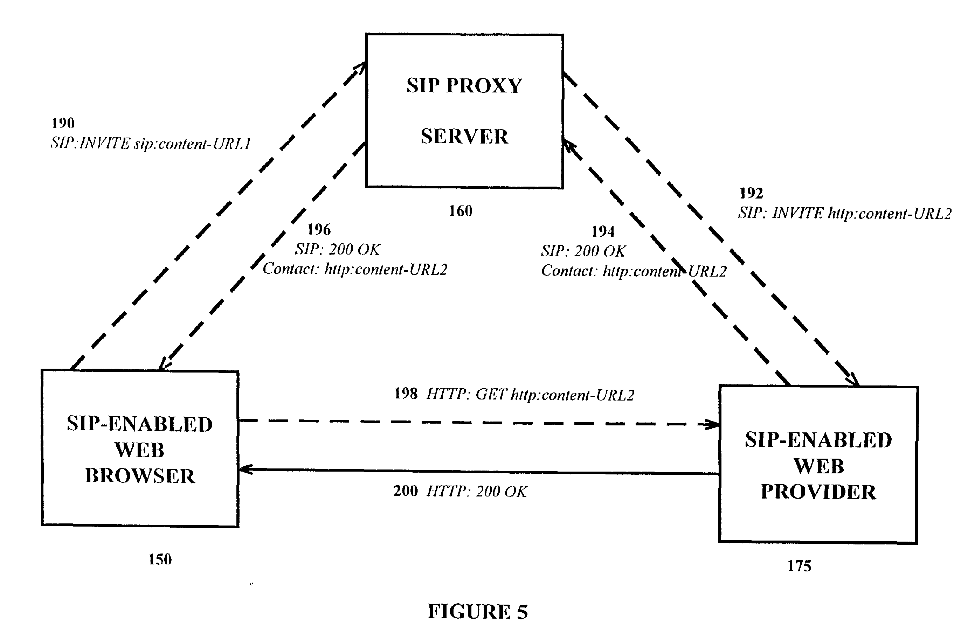

Figure 5 shows a second embodiment of the present invention in which a Web Browser is used to download content. This embodiment is based on the embodiment described above with reference to Figure 4. However, in this embodiment, SIP server 160 is functioning as a proxy SIP server. The user of Web Browser 150 wishes to access content as before. Web Browser 150 and Web Provider 175 are arranged as described above with reference to Figure 4. At step 190, Web Browser 150 sends a SIP request message "INVITE sip:content-URL1" to SIP server 160 as described above with reference to Figure 4. This SIP content URL is resolved into http:content-URL2 by the SIP network as described above. However, rather than passing a redirect message back to Web Browser 150, SIP server 160 proxies the resolved SIP INVITE message to Web Provider 175 at step 192. If Web provider 175 is able to provide the content, it passes a SIP 200 OK message, specifying the sip:content-URL2 in the "Contact:" line, back to SIP server 160 at step 194 which is passed on to Web Browser 150 at step 196. The SIP session is then established.

Thereafter, Web Browser 150 requests the content from Web provider 175 at step 198 and receives it at step 200 in a conventional manner as described above with reference to Figure 4. However, as above, Web provider 175 may not be able to provide the content for some reason, or may wish to negotiate alternative session parameters with Web Browser 150 in which case a different message may be sent at step 194 and relayed at step 196 to Web Browser 150. The request-response process described above with reference to steps 190, 192, 194 and 196 may then be repeated until Web Browser 150 and Web provider 175 have negotiated appropriate session parameters for provision of the required content. The session parameters may include any of the parameters listed above.

### Figure 6

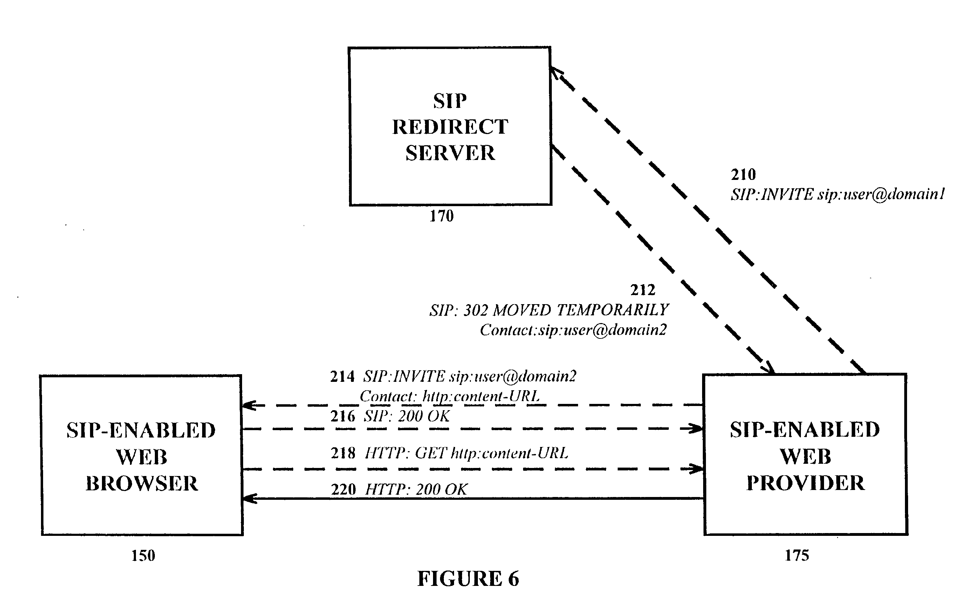

Figure 6 shows a third embodiment of the present invention in which a Web Provider provides content to a user. SIP-enabled Web Browser 150 and SIP-enabled Web provider 175 are arranged as described above. However, the user or business running Web Provider 175 knows the SIP address of the user of Web Browser 150 and wants to send unsolicited content to him/her.

Web provider 170 first sends a SIP INVITE request message of the form "INVITE sip:user@domain1" to SIP redirect server 170 at step 210. SIP server 170 may or may not consult further SIP redirect. proxy or location servers to resolve the location of the user. At step 212 SIP server 170 returns a message of the form "SIP: 302 MOVED TEMPORARILY ... Contact: sip:user@domain2". Web provider 175 then passes a SIP INVITE request message of the form "INVITE sip:user@domain2" specifying the content-URL corresponding to the content he wishes to send to the user of Web Browser 150 at step 214. This INVITE may contain session parameters described in SDP or otherwise. If the invitation to set up a session is acceptable to Web Browser 150, then Web Browser 150 returns a SIP 200 OK message to Web provider 175 at step 216 and proceeds to request the referenced content URL at step 218 by passing it a conventional HTTP GET request message to Web provider 175 which responds at step 220 by passing an HTTP 200 OK together with the content.

However, it may be that the session is not acceptable to Web Browser 150. For example, it is not able to perform the HTTP GET immediately or some parameters need to be negotiated. In this case, Web Browser 150 will not pass a 200 OK response message back to Web provider 175 but a response message of the form "606 UNACCEPTABLE" followed by a description of acceptable session parameters in SDP or some other description protocol. This may be acceptable to Web provider 175 or it may not. The negotiation may continue until an acceptable set of parameters are negotiated at which point the final SIP 200 OK message is passed. For example, if Web Browser 150 is unable to perform the HTTP GET request immediately, for example because it is a mobile phone and the user is currently engaged on a call, it may request that Web provider 175 try again in five minutes time. Alternatively, it may negotiate with Web provider 175 that the session be maintained for an hour and it will automatically perform the HTTP GET request once the user has finished with the call.

Thus it can be seen that using SIP, a Web provider may initiate contact with the user of a Web Browser directly and unsolicited. Furthermore, the Web provider will be able to contact the user at whatever terminal he/she happens to be currently using and arrange a negotiated session for providing the content.

### Figure 7

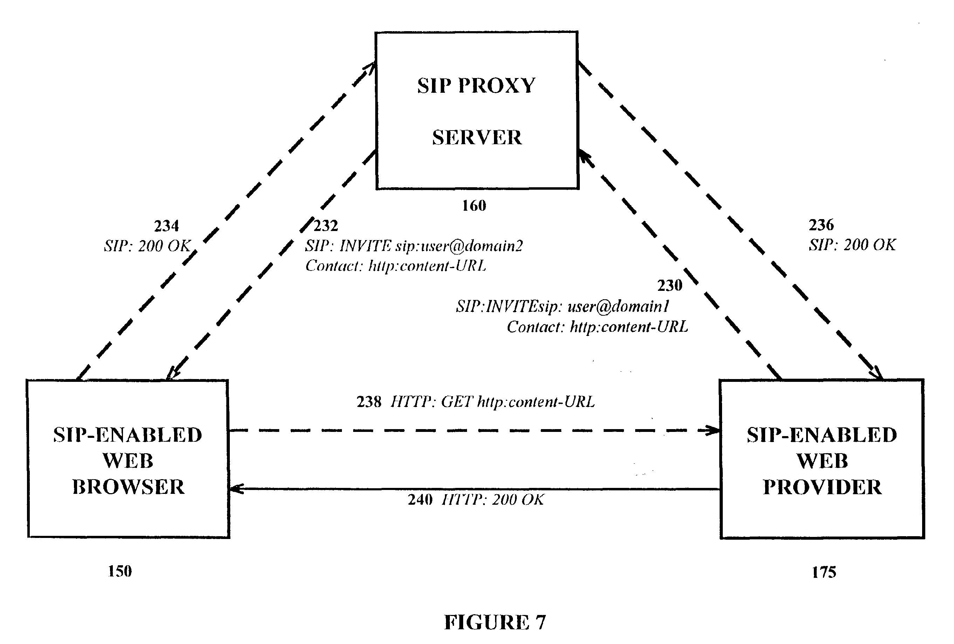

Figure 7 shows a fourth embodiment of the present invention in which a Web Provider provides content to a user. In this embodiment Web provider 175 and Web Browser 150 are as described above with reference to Figure 6. However, SIP server 160 is a SIP proxy server. Web provider 175 sends a SIP INVITE request message specifying the content-URL to SIP server 160 at step 230. At step 232 the resolved SIP message is forwarded on to Web Browser 150. If the session is acceptable to Web Browser 150, it passes a SIP 200 OK message to SIP server 160 at step 234 which is passed on to Web provider 175 at step 236. The SIP session is then established.

Web Browser 150 then passes an HTTP GET request specifying the content URL provided at step 238 in a conventional manner and Web provider 175 returns an HTTP 200 OK message and the content at step 240 also in a conventional manner.

As before, it may be that the session requested by Web provider 175 is not acceptable to Web Browser 150 or its user and thus further negotiating steps may take place in which session parameters are negotiated prior to the final SIP 200 OK message being passed.

### Figure 8

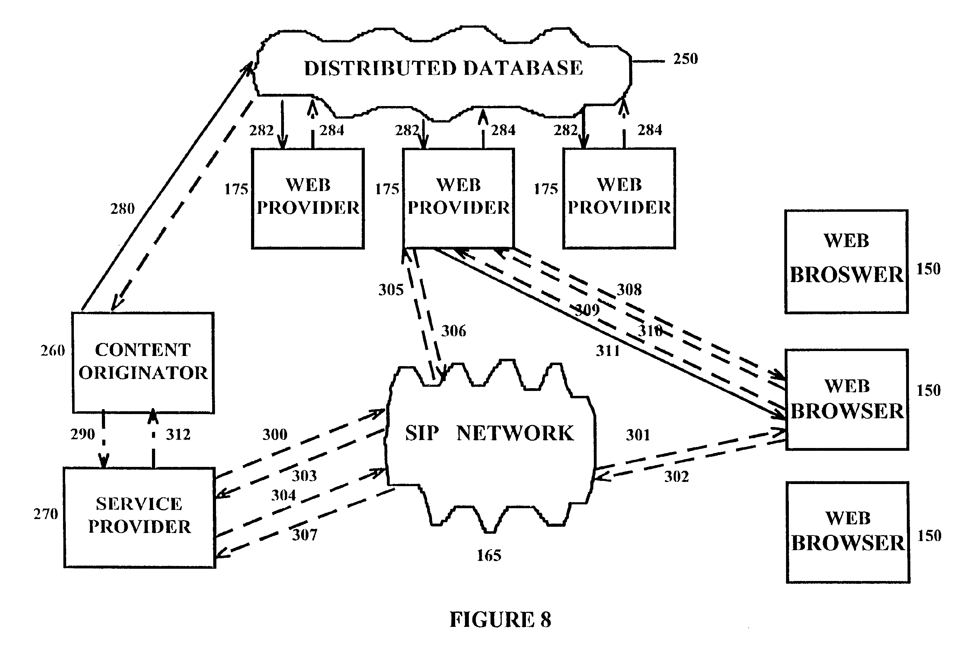

Figure 8 shows a fifth embodiment of the present invention in which a Web service is provided to a user. In this embodiment, the user of SIP-enabled Web Browsers 150 has subscribed to a service offered by the user or business operating SIP-enabled Service Provider 270. For example, the user of Web Browsers 150 may be interested in knowing when certain stocks or shares have risen above or fallen below predetermined values and Service Provider 270 is able to determine when that trigger event occurs. For another example, the user of Web Browsers 150 may be interested in downloading the latest version of an application program, such as Netscape Navigator, when it is released and Service Provider 270 is able to manage the distribution of that content. The user of Web Browsers 150 may have registered for the service by contacting the operators of Service Provider 270 in any manner - e.g. by telephone, fax or physical mail. Alternatively, he/she may have used Web Browsers 150 whether by using conventional Web functions, conventional e-mail, or SIP-enabled functions.

Content Originator 260 is the source of the content of interest to the user of Web Browsers 150. At step 280, Content Originator 260 distributes copies of the content to Distributed Database 250, and at steps 282 these copies are sent to SIP-enabled Web Providers 175 for general availability. At steps 284 and 286, the Web Providers 175 signal, via Distributed Database 250, to Content Originator 260 that the content has been successfully distributed. Furthermore, Web Providers 175 register their content with the SIP network 165 using the SIP REGISTER request message as described above together with information relating to session parameters the individual Web Providers 175 are able to support. For example, one may be a WAP gateway suitable for providing a service to mobile phones, others may be HTTP gateways. For another example, the Web Providers 175 may be located in different geographical locations.

At step 290, Content Originator 260 signals to Service Provider 270 that the content is generally available. Service Provider 270 maintains a list of all those users who subscribed to the service related to the particular content now generally available. The user of Web Browsers 150 is one such user and accordingly Service Provider 270 attempts to fulfil its service in respect of him/her. This may be achieved using SIP network 165. The user interested in the content may be active at one or more of Web Browsers 150. These may be different end systems such as a mobile phone, a PDA or a PC. The SIP network knows which Web Browsers 150 are active and session parameters relevant to those devices because they have registered with the SIP network using the SIP REGISTER request message.

At step 300, Service Provider 270 passes a SIP INVITE request message to SIP Network 165 inviting the user to a session. The INVITE request messages uses the SIP addresses of the user. The messages may be initially sent to SIP proxy or redirect servers, which may consult a SIP location server and may be passed the messages through the SIP network as described above. The user location is resolved in the SIP network as described above and the message passed to one of Web Browsers 150 at step 301. If acceptable, a SIP 200 OK message is passed back at step 302 and returned to Service Provider 270 at step 303. If unacceptable, a negotiation takes place until acceptable parameters for a session have been agreed. When established, the session will have a unique call ID.

On the basis of the acceptable parameters agreed in the session just established, Service Provider 270 sends a second SIP INVITE request message addressed to the SIP address of the content to SIP Network 165 at step 304. The second message will use the same Call ID as provided for the session just established with the user to signify that the content is being invited into an existing session. The parameters specified in the INVITE request will be those agreed between the Web Browser and Service Provider 270. Furthermore, the INVITE request will provide the current location of the user in a header line of the form "Contact: sip:user@host". The location of the most appropriate content will be resolved by the SIP network on that basis, and the message ultimately passed to a selected Web Provider 175 at step 305. If acceptable, a SIP 200 OK message is passed back at step 306 and returned to Service Provider 270 at step 307. In this case, the content at the selected Web Provider will have joined the session. At this point, Service Provider 270, may have fulfilled its responsibility in providing the user with a service, since it has set up the mechanism whereby the content can be provided as explained below. Therefore, it might leave the session, using appropriate SIP BYE messages, and record the completion of it's service in respect of the user. However, Service Provider 270 may have been arranged to wait until the content has been actually provided to the user before discharging itself of it's duty.

Web provider 175 is now able to pass a SIP INVITE request message directly to Web Browser 150 since it knows its current location. Again, the same Call-ID will be used to indicate the same session as before. At step 308, Web Provider 175 passes the message to Web Browser 150 informing it of the content-URL address using a Contact: header line as above. If this is OK the, Web Browser sends a SIP 200 OK response at step 309. At step 310, Web Browser 150 then passes an HTTP GET request specifying the content URL provided in a conventional manner and Web provider 175 returns an HTTP 200 OK message and the content at step 311 also in a conventional manner.

If Service Provider 270 has been arranged to wait until the content has been actually provided to the user before discharging itself of it's duty, it may wait until the Web Browser has left the session, using SIP BYE messages, before itself leaving the session and recording the completion of its service in respect of the user.

In the above description with reference to Figure 8, if any of the SIP INVITE messages sent are unacceptable to the receiving party, a response other than SIP 200 OK will be sent and a negotiation may take place until acceptable parameters for the session have been agreed generally as described above. This will involve further SIP INVITE messages being generated and transacted as described above.

It is to be understood that in any of the above embodiments described with reference to Figures 6, 7, and 8 trigger events could trigger the initiation of contact by a Web Provider or Service Provider, such as the occurrence of events in the course of an e-commerce transaction being fulfilled, such as the sending of a receipt, the sending a dispatch order etc.

It is to be understood that variations of the above embodiments described with reference to Figures 6, 7, and 8 are possible in which the Web Provider providing content to the user is not SIP-enabled and functions as a conventional Web server. In these cases, a SIP-enabled Service Provider, such as Service Provider 270, will have been provided with an HTTP URL identifying content available on a conventional Web server, and, in response to a trigger event, will initiate a session with a SIP-enabled Web Application of the user, passing the HTTP URL to the Web Application which will thus be able to pass an HTTP GET request to the Web server in a conventional manner to download the content.

### Figure 9

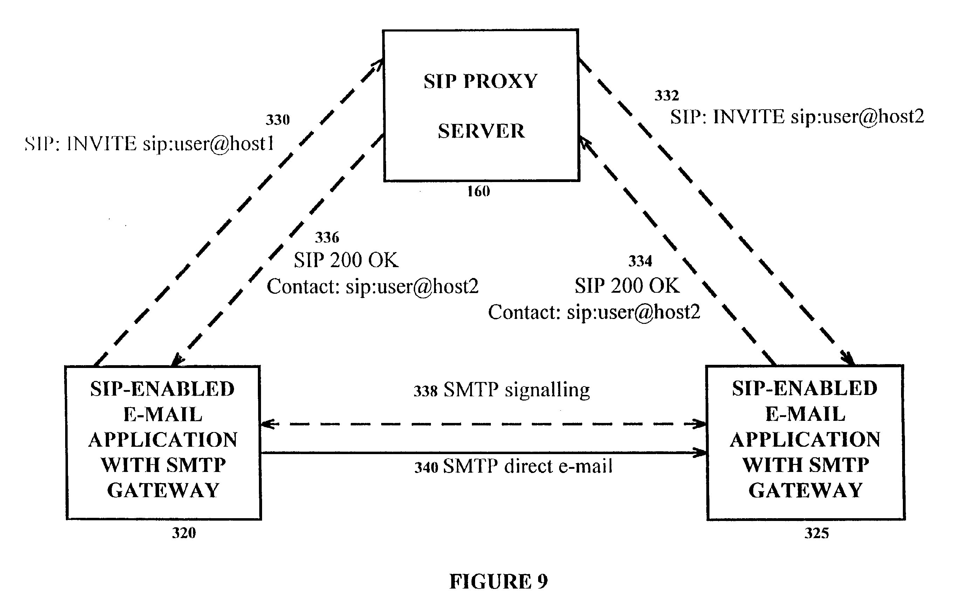

Figure 9 shows a sixth embodiment of the present invention in which an e-mail application is used to send a direct e-mail. SIP-enabled E-mail Applications 320 and 325 are similar to conventional e-mail applications but each comprise a SIP user agent arranged in the protocol stack as described with reference to Figure 3 and an SMTP Gateway. The user of SIP-enabled E-mail Application 320 knows the SIP address of the user of SIP-enabled E-mail Application 325 and wishes to send him/her a direct e-mail.

At step 330, E-mail Application 320 sends a SIP INVITE request message to SIP Proxy Server 160. The SIP INVITE request message is addressed to the SIP user address of the user of E-mail Application 325. SIP Proxy Server 160 resolves the actual location as described above and passes the SIP INVITE request message to E-mail Application 325 at step 332. If the session is acceptable, E-mail Application 325 passes a SIP 200 OK response back at step 334 and this is passed to E-mail Application 320 at step 336. The SIP 200 OK message passed to E-mail Application 320 provides the actual location of E-mail Application 325. This enables E-mail Application 320 to set up and SMTP connection between E-mail Application 320 and E-mail Application 325 at step 338 and to send an SMTP e-mail direct to E-mail Application 325 at step 340.

As described above, E-mail Application 320 could send the initial SIP INVITE request message to a SIP Redirect Server, rather than a SIP Proxy Server. The changes to subsequent SIP messages being passed that would result have been adequately described and will not be repeated here. Further, as has also been described above, the session invite request to E-mail Application 325 may not be acceptable. In that case, negotiation may take place between E-mail Application 320 and E-mail Application 325 and an acceptable set of parameters for sending the direct SMTP e-mail agreed.

### Figure 10

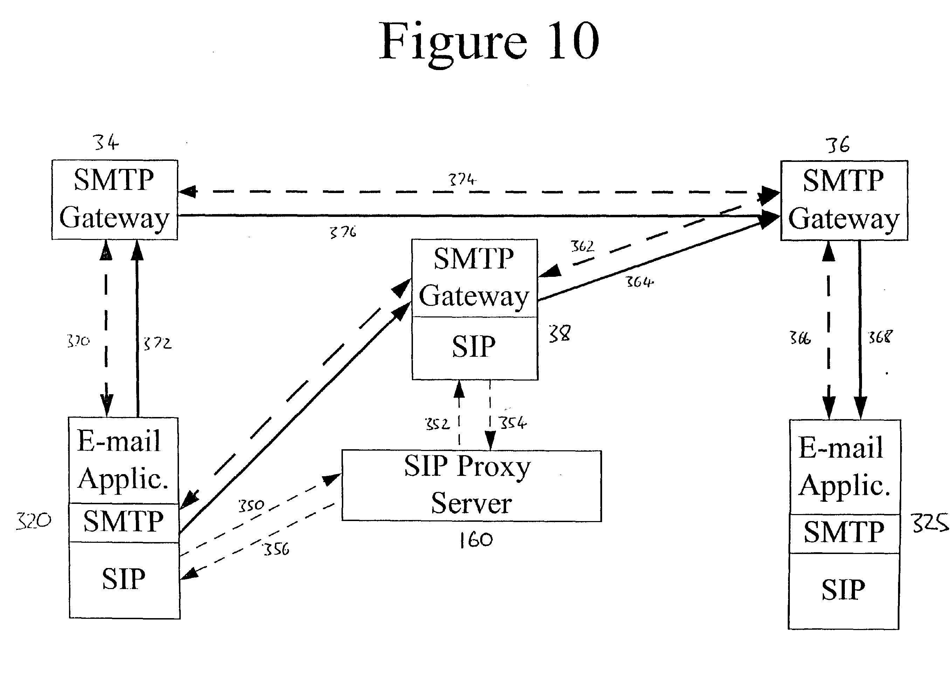

Figure 10 shows a seventh embodiment of the present invention in which an e-mail application capable of sending a direct e-mail is used to send an e-mail to the recipient-side e-mail gateway. SIP-enabled E-mail Applications 320 and 325 are as described above with reference to Figure 10. As before, the user of SIP-enabled E-mail Application 320 knows the SIP address of the user of SIP-enabled E-mail Application 325 and wishes to send him/her a direct e-mail. However, this user is currently unavailable at a suitable SIP-enabled terminal, either because he/she is not currently active at any SIP-enabled terminal or the SIP-enabled terminal in use is not adapted to receive e-mail or is not suited to permanently storing received e-mail. Rather than simply not send any e-mail to the recipient user at all, SIP-enabled E-mail Application 320 provides backwards-compatibility by using the conventional SMTP network to deliver the e-mail to the user's recipient-side SMTP Gateway. This is achieved according to one of two methods.

In a first of such methods, E-mail Application 320, at step 350, passes a SIP INVITE request message to SIP Proxy Server 160 exactly as described above at step 330. However, the SIP network may not able to resolve the SIP user address, because the user of E-mail Application 320 is currently unavailable at a SIP-enabled terminal, and SIP Proxy Server 160 proxies the message to SIP-enabled SMTP Gateway 38 instead. Alternatively, E-mail Application 325 declines the session and redirects the SIP INVITE to SIP-enabled SMTP Gateway 38 instead. Either way, SIP Proxy Server 160 proxies the message to SIP-enabled SMTP Gateway 38 at step 352, whose location address the SIP network is aware of. SMTP Gateway 38 is arranged to act on behalf of the user of E-mail Application 325 and may agree appropriate session parameters for sending the e-mail. If the request to set up a session is acceptable to SMTP Gateway 38, then a 200 OK message is passed back to SIP Proxy Server 160 at step 354, and on to E-mail Application 320 at step 356. At step 358, E-mail Application 320 then sets up a connection to SMTP Gateway 38 in a conventional manner using POP, IMAP or SMTP. The e-mail is then passed to SMTP Gateway 38 in a conventional manner at step 360 and is forwarded through the SMTP network to recipient-side SMTP Gateway 36 at steps 362 and 364 in a conventional manner. At some point in the future, E-mail application 325 may connect to recipient-side SMTP Gateway 36 in a conventional manner using POP, IMAP or SMTP at step 366 and receive the e-mail in a conventional manner at step 368. As has been described above, the SIP INVITE request message may not be acceptable to SMTP Gateway 36 and a negotiation may take place with E-mail Application 320 to agree acceptable parameters on behalf of the user of E-mail Application 325 , prior to step 358.

In a second of method using the conventional SMTP network to deliver the e-mail, E-mail Application 320 communicates with SIP Proxy Server 160 as before to try and send the e-mail direct, but due to the unavailability of the recipient user at a suitable or any SIP-enabled terminal, which unavailability is signalled to E-mail Application 320 in the SIP response message passed by SIP Proxy server 160, E-mail Application 320 instead passes the e-mail to sender-side SMTP Gateway 34 at steps 370 and 372 in a conventional manner. The e-mail is then forwarded through the SMTP network to recipient-side SMTP Gateway 36 in a conventional manner at steps 374 and 376, and may be obtained at some point in the future by the user of E-mail Application 325 in the conventional manner describe above.

It is to be understood that, in the above description with reference to figure 10, E-mail Application 320 could also send the initial SIP INVITE request message to a SIP Redirect Server to achieve the same end result, rather than SIP Proxy Server 160. It is also to be understood that more than one SIP proxy server or redirect server may be involved in the SIP request-response transactions as well as one or more SIP location servers.

In an eighth embodiment of the present invention, a conventional e-mail client is adapted to function as a SIP-enabled e-mail application as described above with reference to Figures 9 and 10 as follows. The e-mail client is provided with a SIP UA and an SMTP Gateway resident on the user terminal as described above. However, the address of the sender-side SMTP Gateway used by the e-mail application in conventional e-mail transactions is changed to reference the resident SMTP Gateway rather than an external SMTP Gateway. The user of the adapted e-mail client wishes to send an e-mail and knows the SIP address of the intended recipient. He/she then uses the e-mail client in a conventional manner but addressing the recipient using the SIP address. The e-mail client attempts to send the e-mail in a conventional manner, however, it is sent to the resident SMTP Gateway rather than an external one. The resident SMTP Gateway then uses the SIP UA to attempt sending the e-mail direct as described above with reference to Figure 9. Alternatively, the two methods described above with reference to Figure 10 are used to send the e-mail to the recipient-side SMTP gateway for later access by the recipient. In this manner conventional e-mail clients can easily be adapted use the SIP functionality described with reference to Figures 9 and 10.

In further embodiments of the invention, the functionality of SIP is used to transmit control messages from an automated data transmitting device to one or more user terminals containing user applications for which the control data is intended. In these embodiments, a model similar to that described in relation to Figures 6, 7 or 8 is used, with the Web Provider being replaced by the automated data transmitting device, and the user terminal not fetching Web content in response to the control messages, but performing operations in the user applications. For example, the control application may be an alarm clock application, or a fire alarm application.

A SIP-enabled automated data transmitting device runs the Alarm clock application which allows the user to specify under their SIP_URL a set of alarms and associated actions. The alarms could be a wake-up call, meeting reminder calls, diary events, exercise reminders (Alexander technique reminders on posture, tell computer users to get a coffee and take a walk etc., regular exercise reminders from Physiotherapists etc.), calendar events (birthdays, playing football, book holiday etc.). The alarm being Internet based can use SIP to ensure that the user receives the alarm call wherever they may be registered. The automated data transmitting device could send the alarm to a number of alternative SIP_URLs and/or let the SIP servers resolve the user's present location. The alarms can also be group_URL based (or a set of user_URL's) so that all members of a football team get reminded of the game etc.

Because SIP is media independent, the alarm content could be anything from a voice message, text message, tone, audio file, video file, A/V stream etc., game, web page... and can originate not just from the Alarm application but also from any separate Internet-based content server (MP3, Real audio/video streaming servers, game, WWW) which has been SIP-enabled, and for which the Alarm application can trigger streaming to the client_URL at which the user is located.

For example, a 'Fire Alarm' service may be implemented, whereby all SIP user URLs within an office have been added to a Group SIP URL. Should fire be detected, and the Fire Alarm pressed on a particular user terminal, then the SIP Alarm now sends an INVITE to the group SIP URL associated with that fire location. The SIP server for that group then sends out a fire alarm message to all the associated user SIP URLs so that fire alarm messages appear on the terminals (audible/text/video/whatever depending on terminal type). Each SIP user may send back an acknowledgement to the fire alarm saying that all people in this room are leaving and other such useful fire process information. Alternatively, the alarm is sent to a single Fire Alarm Service User Agent which deals with the alarm in that area which is known in the SIP network..

The Fire Alarm Service User Agent resolves the 'From:' header field of the Alarm (plus other info in message) to discover the Office Group SIP URL in the proximity of the fire. It then resolves the Group URL into user SIP URLs, and sends an appropriate 'Fire Alarm' INVITEs to each one simultaneously, in a process known as 'forking'. The Fire Alarm Service User Agent then monitors the responses from the User Agents associated with those user URLs: 200 OK responses indicating that the alarm has been raised at that terminal, and anything else ― especially non-responses after a given timeout ― indicating that the alarm has not been raised in this area. The information retrieved by the Fire Alarm Service User Agent could be displayed, saved and sent to inform appropriate personnel of the possibility of danger and progress in exact physical locations.

In this document, the following terms have the following meanings. The term "content", and cognate terms, denote any information or data stored on a data processing device in any data storage medium, and include a text message, Web page and an e-mail. The term "Web content" and cognate terms includes any content comprising hyperlinks to other content including, in particular but not exclusively, SIP URLs and HTTP URLs. The term "e-mail" denotes any data or information stored in any data storage medium, capable of being transmitted by electronic means, including in particular, but not exclusively, textual data and attachments (if any) such as text, graphics, video and audio content.

It can be seen that SIP, combined with SDP or another session description protocol, can be used by communications applications such as web providers and e-mail applications, to negotiate and establish sessions between one or more parties. Once a session is established between two or more parties, it can be used to send or receive data directly between the parties - i.e. via network routers rather than servers. Last, SIP enables applications to function according to a peer to peer model rather than a client/server or store and forward model.

## Claims

1. A method of transferring data content via a data communications network, said method comprising:
(a) transmitting an initiating request from one party to a locating server, said request containing an identifier for another party to be located;
(b) once the party to be located has been located, conducting a negotiation process between at least two parties including the located party, said negotiation process involving the transmission of data, identifying one or more parameters for defining the transfer to be performed, from at least one of the at least two parties to another of the at least two parties, until at least one of the at least two parties have indicated agreement to the parameters of the transfer to be performed;
(c) once the transfer to be performed has been agreed, conducting the data content transfer in accordance with parameters defined in step (b), said transfer occurring in one direction only between a transmitting party and a receiving party, said transmitting party only transmitting content and said receiving party only receiving content during said transfer.

2. A method of initiating a transfer of data content from a content server to a client using an automated data transmitting device, said method comprising the following steps:
(a) in response to a trigger event, transmitting an initiating request from said automated data transmitting device to a locating server, said request containing an identifier for a user; and
(b) transmitting from said automated data transmitting device an identifier for said content to said client, said identifier allowing said client to download said content from said server.

3. A method according to claim 2, comprising conducting a negotiation process with said client, said process involving the transmission of data, identifying one or more parameters for defining the download to be performed, from at least one of the automated data transmitting device and the client.

4. A method of initiating a data transfer of content from a content server to a client using an automated data transmitting device, said method comprising the following steps:
(a) in response to a trigger event, transmitting an initiating request from said automated data transmitting device and conducting a negotiation process with said client, said process involving the transmission of data, identifying one or more parameters for defining the download to be performed, from at least one of the automated data transmitting device and the client,
(b) transmitting from said automated data transmitting device an identifier for said content to said client, said identifier allowing said client to download said content from said server.

5. A method according to claim 2, 3 or 4, wherein the trigger is any of a preset time elapsing, an event relating to the availability of new content, and an external trigger event.

6. A method according to any preceding claim, wherein said identifier is transmitted in said request.

7. A method of transferring data content from a user terminal to a second party, said method comprising:
(a) generating and/or receiving data content at said user terminal and storing said data content on the user terminal;
(b) following a request from the user to transmit the stored data content, generating a data transfer initiating request from said user terminal to a locating server, said request containing an identifier for the second party;
(c) conducting a negotiation process with said second party, said process involving the transmission of data, identifying one or more parameters for defining the transfer to be performed, from at least one of the user terminal and the second party; and
(d) once the transfer to be performed has been agreed, conducting the data content transfer in accordance with parameters defined in step (c).

8. A method according to claim 7, wherein the parameters being negotiated include the type and/or format of content to be transferred.

9. A method of transferring data content via a data communications network, said method comprising:
(a) conducting a negotiation process between at least two parties, said negotiation process involving the transmission of data, identifying an application layer transfer mode for the transfer to be performed, from at least one of the at least two parties to another of the at least two parties, until at least one of the at least two parties have indicated agreement to the transfer mode for the transfer to be performed;
(c) once the transfer mode has been agreed, conducting the data content transfer in the agreed transfer mode.

10. A method according to claim 9, wherein the transfer modes being negotiated include any, or all, of HTTP, HTTPS, TIP, SMTP, NNTP, FTP and WAP.

11. A method according to any preceding claim, wherein said content comprises an email message.

12. A method according to any preceding claim, wherein said content comprises a Web page.

13. A method of controlling an application running on a user terminal, by transmitting control data to user terminal using an automated data transmitting device via a data communications network, said method comprising the following steps:
(a) in response to a trigger event, transmitting an initiating request from said automated data transmitting device to a locating server, said request containing an identifier for a user; and
(b) transmitting from said automated data transmitting device said control data for receipt by said user terminal.
